# EUROPEAN PATENT SPECIFICATION

(11) **EP 1 943 713 B1**
(45) Date of publication and mention of the grant of the patent: **08.12.2010**
(21) Application number: 06821252.1
(22) Date of filing: 30.10.2006
(51) Int. Cl.: H02K 7/118

(54) **A MOTOR**
MOTOR
MOTEUR

(30) Priority: 31.10.2005 TR 200504343
(43) Date of publication of application: 16.07.2008
(73) Proprietor: Arçelik Anonim Sirketi, 34950 Istanbul (TR)
(72) Inventor: AKBAS, M. Omer, 34950 Istanbul (TR); DIRIL, Orhan, 34950 Istanbul (TR)
(86) International application number: PCT/IB2006/054011
(87) International publication number: WO 2007/052210

(56) References cited:
- EP-A1- 0 432 852
- EP-A2- 0 913 911
- DE-A1- 3 420 371

## Description

This invention relates to a single phase synchronous motor wherein means are provided to ensure a uni-directional rotation at startup.

Single phase synchronous motors broadly used in various areas such as watches or home appliances, are basically composed of a stator incorporating a winding comprising two coils which are serially connected to each other and located on a core formed by laminations, and of a rotor incorporating a magnet rotating proportional to the frequency of the supply current in said coils and a shaft to transfer the rotational motion of the mentioned magnet. As a result of the fact that the air gap between the stator and the rotor is not constant and that an angle is formed between the polar axis of the magnet and the stator polar axis at non-energized state, the motor can be activated on its own without the need for a separate mechanism to be utilized at startup.

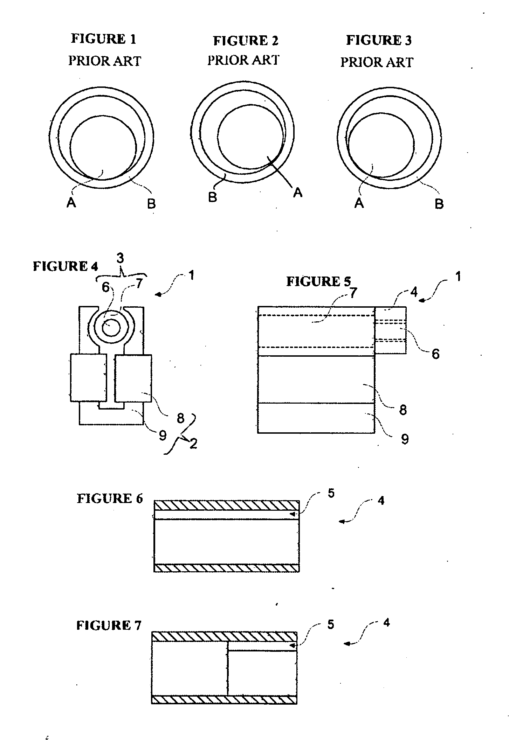

The rotor shaft (A) is usually supported at a cylindrical housing which is named as sliding bearing (B) and has a diameter larger than the diameter of the shaft. As a consequence of the difference in diameters, a certain gap is provided between the bearing (B) and the rotor shaft (A). If the shaft (A) is positioned horizontally, in stationary condition, it sits to the bottom of the sliding bearing (B) under the effect of gravity (Figure 1). As a result of that, there is an eccentricity between the centers of the bearing (B) and the rotor shaft (A). The rotor shaft (A) starting to rotate in clockwise direction with a certain angular velocity rolls on the internal surface of the bearing (B) to the right (Figure 2). Else if the rotor shaft (A) is rotated in counterclockwise direction with the same mentioned angular velocity, it rolls to the left inside the bearing (B) (Figure 3). The rotor shaft (A) rolling either to the right or left elevates inside the bearing (B) until the equilibrium position and keeps rotating around its own axis at this mentioned equilibrium position. For the rotation in both directions, the size of the contact surface between the bearing (B) and the rotor shaft (A) and thus the magnitude of the frictional force acting on the rotor shaft (A) is the same.

If the rotor shaft (A) is positioned vertically, in stationary condition, it is located in the middle of the sliding bearing (B). However, after it starts to rotate with a certain angular velocity, it skids to the right or left inside the bearing (B). Afterwards, it rotates at its position around its own axis as it leans against the internal walls of the bearing (B). Also in that case, the rotor (A) is exposed to the same frictional force in both directions.

In motors in the current state of the art, when the stator is supplied with current at startup moment, in which direction (clockwise or counter clockwise) the rotor will start to rotate is uncertain, because the frictional force acting on the rotor inside the bearing is independent from the direction of rotation, the position of the poles of the magnet is unknown, and it is not easy to determine at which point of its half period the alternate current supply voltage is.

In the current state of the art, in British patent document no. GB800743, a description is given of a motor wherein an L-shaped arm which is rotatably fixed at a stationary point, is in contact with the rotor. As the rotor starts to rotate in the undesired direction, by being forced to move with the effect of friction by the rotor, said arm leans against a pin rotating together with the mentioned rotor, thereby preventing that rotation in the undesired direction.

In the United States patent document no. US 3448308 and in the European patent document no. EP913911, descriptions are given of bearings with projections at their internal surface and of rotors having extensions engaging with said projections if said rotors rotate in the undesired direction.

In the German patent document no. DE10065676, a description is given of a rotor incorporating several wings that open up as a result of the centrifugal force generated during the rotation. Said wings incorporate a sickle-shaped arcuate structure. If the rotor starts up in an undesired direction, the mentioned wings engage with the recesses positioned on the internal wall of the bearing and thus prevent the rotation in the said direction.

In the state of the art applications, mechanisms designed to ensure a uni-directional startup of a single phase synchronous motor are considerably complicated. Furthermore, the usable life span of said mechanisms is pretty short.

The aim of the present invention is the realization of a single phase synchronous motor wherein a specific mechanism is provided to ensure a uni-directional startup, said mechanism being simple, durable and low-cost.

The motor realized in order to fulfill the object of the present invention is described in the accompanying claims.

In the motor subject to the present invention, the internal surface of the bearing is separated into two portions having different diameters. In an embodiment of the present invention, said two portions are combined via a step. The portion with the smaller diameter contacts the shaft approximately along the internal surface of a semi-cylinder, applying a larger friction whereas the portion with the larger diameter applies a smaller friction to the shaft since it is in contact with the mentioned shaft just along a line. Thereby, in a specific direction of the rotation, the shaft is exposed to a larger friction compared to the other direction. If the rotor tries to start in the direction of the small-diametered portion, it first fits to the interior of this portion and then stops rotating since it cannot overcome the larger frictional force. At that instant, when the direction of the current supplied to the stator is changed, the rotor tries to rotate in the other direction and passes to the larger-diametered portion. The rotor, by overcoming the smaller frictional force, starts to rotate in the direction of the latter portion. Since the rotor always will rotate in the direction with smaller friction and not in the other direction, it is assured that it always will start to rotate in the same direction.

The above-described structure comprising two portions with different diameters may be employed either at a certain section of the bearing or at the entire internal surface, in the axial direction, depending on the magnitude of the frictional force that is necessary to be applied on the shaft.

By changing the contact area of the internal surfaces of the bearing with the shaft and thus the frictional force acting on the shaft, with a simple solution, it is accomplished that the motor starts to rotate only in the desired direction.

The motor realized in order to fulfill the objectives of the present invention is illustrated in the attached figures where:

Figure 1- is a schematic representation of a rotor shaft and a bearing in the prior art, when the rotor is not moving.

Figure 2 - is a schematic representation of a rotor shaft and a bearing in the prior art, when the rotor is rotating in clockwise direction.

Figure 3 - is a schematic representation of a rotor shaft and a bearing in the prior art, when the rotor is rotating in counter clockwise direction.

Figure 4 - is a schematic front view of a motor.

Figure 5 - is a schematic side view of a motor.

Figure 6 - is a sectional view of an embodiment of the bearing.

Figure 7 - is a sectional view of another embodiment of the bearing.

Figure 8 - is a schematic representation of the rotor shaft and the bearing in an embodiment, while the rotor is stationary.

Figure 9 - is a schematic representation of the rotor shaft and the bearing in an embodiment, while the rotor starts to rotate in clockwise direction.

Figure 10 - is a schematic representation of the rotor shaft and the bearing in an embodiment, while the rotor starts to rotate in counter clockwise direction.

Figure 11- is a schematic representation of the rotor shaft and the bearing in another embodiment, while the rotor is stationary.

Figure 12 - is a schematic representation of the rotor shaft and the bearing in another embodiment, while the rotor starts to rotate in clockwise direction.

Figure 13 - is a schematic representation of the rotor shaft and the bearing in another embodiment, while the rotor starts to rotate in counter clockwise direction.

Elements shown in figures are numbered as follows:

1. Motor

2. Stator

3. Rotor

4. Bearing

5. Step

6. Shaft

7. Magnet

8. Winding

9. Core

The motor (1) is of single-phase synchronous type and comprises

- a stator (2) having a core (9) formed by laminations and on the said core (9) a winding (8) incorporating two serially connected coils where electric current is supplied,

- a rotor having (3) a magnet (7) rotating proportional to the frequency of the supply current in said windings (8) and a shaft (6) transferring the rotational motion of the mentioned magnet (7) outside, and

- a bearing (4) in which said shaft (6) rotates (Figure 4 and Figure 5).

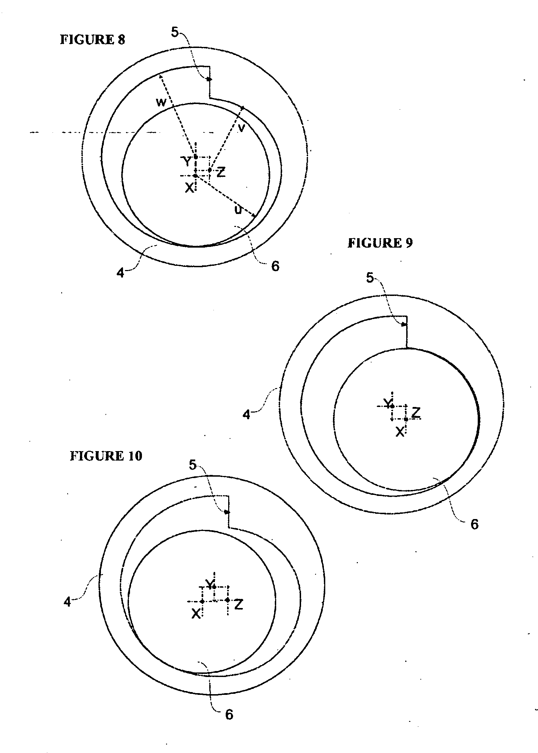

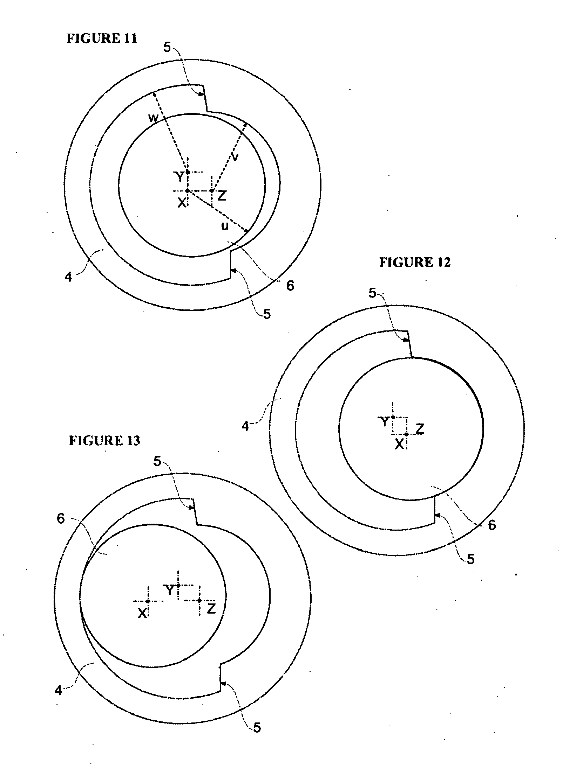

In the motor (1) subject to the present invention, the shaft (6) is loosely fitted into the bearing (4) such that a gap is provided therebetween. As the stator (2) is supplied with electricity, the rotor (3) starts up in a certain direction and the shaft (6) moves in that direction towards one of the two opposite positions inside the bearing (4). At the position it reached, the shaft (6) tries to rotate around its own axis contacting the internal wall of the bearing (4). The bearing (4) incorporates two segments each of which supports the shaft (6) in one of the mentioned positions, wherein, when the shaft is at that position, one of them contacts the shaft (6) along a line whereas the other one contacts the shaft (6) along a surface, thus applying different frictional forces to the shaft (6) (Figure 8 and Figure 11).

Each of the mentioned segments is approximately in the form of a semi cylinder. The radius (v) of the segment located at the undesired direction the rotor (3) starts to rotate in, is approximately equal to the radius (u) of the shaft (6) (u≈v). On the other hand, the radius (w) of the segment located at the desired direction the rotor (3) starts to rotate in, is larger than the radius (u) of the shaft (6) (w>u).

For that reason, when the rotor (3) is actuated in clockwise direction depending on the current, the shaft (6) moves from its rest position to the right and attains its position at that side, wherein said shaft (6) contacts the entire interior wall of the segment with smaller diameter (Figure 9 and Figure 12). Else if the rotor (3) is actuated in counter clockwise direction, the shaft (6) moves to the left and attains its position in the segment with larger diameter, wherein the shaft (6) is in contact with the said segment just along a line (Figure 10 and Figure 13). The difference between the sizes of contact areas in the mentioned two segments, causes that the magnitude of frictional forces acting on the rotor (3) are also different. Thereby, without the need for any additional mechanism, the bearing (4) applies different frictional forces to the shaft (6), one for clockwise rotation and the other for counter clockwise direction. In the undesired direction where the rotor (3) is to start rotating, the frictional force acting on the shaft (6) inside the bearing (4) is larger than the initial starting moment of the motor (1). On the other hand, the frictional force in the desired direction where the rotor (3) is to start rotating is less than the initial moment. Therefore, when the stator (2) is supplied with current, the rotor (3) starts to rotate in the direction with the smaller frictional force and thus towards the segment with larger diameter.

In an embodiment of the present invention, two semi cylinder shaped segments of the bearing (4) are joined preferably such that one of their edges are located next to each other, wherein the bearing (4) further comprises a step (5) combining the other edges of the segments with larger and smaller diameters (Figure 8, Figure 9 and Figure 10). At the spot where the two segments are located next to each other, a discontinuity on the internal contour of the bearing (4) is not allowed. Thereby, particularly in horizontally positioned rotors (3), there is not a projection etc. at the position where the shaft (6) sits on under the effect of gravity while it is stationary. The dimensions and position of the step (5) are determined by the manufacturer such that the shaft (6) does not hit the mentioned step (5) as it is rotating in the desired direction at the position in the segment with the larger diameter.

In another embodiment of the present invention, the bearing (4) incorporates two steps (5) combining the opposite sides of the semi cylinder shaped segments (Figure 11, Figure 12 and Figure 13). Described embodiment is particularly employed for vertically positioned rotors (3).

In yet another embodiment (Figure 6) of the present invention, the step (5) extends along the entire bearing (4) in the axial direction, whereas in another embodiment (Figure 7) it extends along a part of it. While deciding the length of the portion with that step (5), the magnitude of the frictional force that is to be applied to the shaft (6) in order to prevent the rotation in the undesired direction is considered.

In another embodiment of the present invention, the motor (1) further incorporates a bush (not shown on figures) which is concentric with the shaft (6) and has a larger diameter than that of the shaft (6) and whereby said shaft (6) is fitted into the bearing (4). Thereby, the principles of the present invention may also be applied in the motors (1) with a shaft (6) having a considerably small diameter.

In the motors (1) in accordance with the present invention, when the stator (2) is not energized, the rotor (3) is positioned in the middle of the bearing (4) if it is positioned vertically, whereas it sits on the bottom of the bearing (4) if it is positioned horizontally. When the stator (2) is energized, the rotor (3) starts to rotate in one direction depending on the position of the magnet (7) poles and the point where the alternate current supply voltage stays in its half period. When the rotor (3) starts to rotate in counter clockwise direction, the shaft (6) attains its position at that side. At that position, the center (X) of the shaft (6) does not coincide with the center (Y) of the segment with larger diameter. The rotor (3) overcomes the frictional force which is smaller than the initial starting moment and keeps rotating in that direction. When the rotor (3) starts to rotate towards the segment with smaller diameter, the shaft (6) moves towards its position at that side and contacts the segment with the smaller diameter from the entire interior as it reaches the mentioned position. At that position, the center (X) of the shaft (6) coincides with the center (Z) of the segment with smaller diameter. The rotor (3) which is not able to overcome the frictional force acting at that direction, being larger than the initial starting moment, starts to rotate in the other direction. Thereby, independent from the position of the magnet (7) poles and the point where the alternate current supply voltage stays in its half period, the rotor (3) will always rotate towards the segment with larger diameter.

By means of the motor (1) according to the present invention, a solution is proposed to the uni-directional startup problem without adding other mechanisms to the rotor (3) or the bearing (4). As a result of the afore-described simple and easily applicable solution, it is possible to utilize single phase synchronous motors (1) in a wider area. Furthermore, it is achieved to reduce the cost of using single phase synchronous motors (1) inside several home appliances, since complicated solutions of prior art proposed for controlling the startup direction of such kind of motors (1) are not employed.

## Claims

1. A single phase synchronous motor(1) comprising
- a stator (2),
- a rotor (3) incorporating a shaft (6) for transmitting the rotational motion outside, and
- a bearing (4) where the shaft (6) is fitted such that a gap is provided therebetween, wherein, as the stator (2) is supplied with electricity, the shaft (6) starts to move towards the direction in which the rotor (3) starts to rotate, in either one of the two positions inside said bearing (4) and leans against the internal wall at that reached position,
and **characterized by** a bearing (4)
- incorporating two semi cylindrical segments each of which supports the shaft (6) in one of the mentioned positions,
- wherein the radius (v) of the segment with smaller diameter is approximately equal to the radius (u) of the shaft (6) (u≈v), whereas the radius (w) of the segment with larger diameter is larger than the radius (u) of the shaft (6) (w>u) and thus at these positions, one of the segments contacts the shaft (6) along a line whereas the other is in contact with the shaft (6) along a surface, applying different frictional forces,
- wherein the rotor (3) is forced to start rotating always towards the segment with larger diameter and smaller frictional force, since at the segment with larger diameter, the frictional force acting on the shaft (6) is less than the initial starting moment whereas it is larger at the segment with smaller diameter.

2. A motor (1) according to Claim 1, **characterized by** a bearing (4) which incorporates a step (5) positioned at the spot where the segments with smaller and larger diameters are combined.

3. A motor (1) according to Claim 1, **characterized by** a bearing (4) which incorporates two steps (5) combining the two adjoining edges of the two segments.

4. A motor (1) according to any one of the above Claims, **characterized by** a bearing (4) which incorporates a step (5) extending along the entire surface in the axial direction.

5. A motor (1) according to any one of the Claims 1 through 3, **characterized by** a bearing (4) which incorporates a step (5) extending along only a part of it in the axial direction.

## Patentansprüche

1. Einphasiger Synchronmotor (1), umfassend:
- einen Stator (2)
- einen Rotor (3), der eine Welle (6) zum Übertragen der Drehbewegung nach außen aufweist, und
- ein Lager (4), in das die Welle (6) eingesetzt ist, derart, dass dazwischen eine Lücke bereitgestellt ist, wobei für den Fall, dass dem Stator (2) Elektrizität zugeführt wird, die Welle (6) sich in die Richtung, in die sich der Rotor (3) zu bewegen beginnt, in eine der zwei Positionen im Lager (4) zu bewegen beginnt, und sich in der erreichten Position an die Innenwand anlehnt,
and **gekennzeichnet durch** ein Lager (4)
- das zwei halbzylindrische Segmente aufweist, von denen jedes jeweils in einer der genannten Positionen die Welle (6) trägt,
- wobei der Radius (v) des Segments kleineren Durchmessers annähernd gleich dem Radius (u) der Welle (6) (u≈v) ist, während der Radius (w) des Segments größeren Durchmessers größer als der Radius (u) der Welle (6) (w>u) ist und auf diese Weise in diesen Positionen eines der Segmente an einer Linie in Kontakt mit der Welle (6) gelangt, während das andere an einer Fläche in Kontakt mit der Welle (6) gelangt, wodurch unterschiedliche Reibungskräfte angewandt werden,
- wobei der Rotor (3) dazu gezwungen wird, sich stets zu dem Segment mit größerem Durchmesser und geringerer Reibungskraft hin zu drehen, da die Reibungskraft, die an dem Segment größeren Durchmessers auf die Welle (6) wirkt, kleiner ist als das Anfangsdrehmoment, während sie an dem Segment kleineren Durchmessers größer ist.

2. Motor (1) nach Anspruch 1, **gekennzeichnet durch** ein Lager (4), das eine Stufung (5) aufweist, die an der Stelle angeordnet ist, an der die Segmente kleineren und größeren Durchmessers sich miteinander vereinen.

3. Motor (1) nach Anspruch 1, **gekennzeichnet durch** ein Lager (4), das zwei Stufungen (5) aufweist, die die zwei aneinander liegenden Kanten der zwei Segmente miteinander vereinen.

4. Motor (1) nach einem der vorangehenden Ansprüche, **gekennzeichnet durch** ein Lager (4), das eine Stufung (5) aufweist, die sich in Axialrichtung an der Gesamtfläche erstreckt.

5. Motor (1) nach einem der Ansprüche 1 bis 3, **gekennzeichnet durch** ein Lager (4), das eine Stufung (5) aufweist, die sich nur an einem Teil davon in Axialrichtung erstreckt.

## Revendications

1. Un moteur monophasé synchrone (1) comprenant
- un stator (2),
- un rotor (3) comportant un axe (6) pour transmettre le mouvement rotationnel à l'extérieur, et
- un palier (4) ou l'axe (6) est monté de telle sorte qu'un espace est fourni entre celles-ci, dans lequel, comme le stator (2) est fourni avec l'électricité, l'axe (6) commence à se déplacer vers la direction dans laquelle le rotor (3) commence à tourner, soit dans l'une des deux positions à l'intérieur dudit palier (4) et s'appuie contre la paroi interne à cette position atteinte,
et **caractérisé par** un palier (4),
- comportant deux segments semi-cylindriques dont chacune supporte l'axe (6) dans l'une des positions mentionnées,
- dans lequel le rayon (v) du segment ayant le plus petit diamètre est approximativement égal au rayon (u) de l'axe (6) (u≈v), alors que le rayon (w) du segment ayant le plus grand diamètre est supérieur au rayon (u) de l'axe (6) (w>u) et donc à ces positions, un de segments touche l'axe (6) le long d'une ligne tandis que l'autre est en contact avec l'axe (6) le long d'une surface, appliquant des forces de frottement différentes,
- dans lequel le rotor (3) est forcé à commencer à tourner toujours vers le segment ayant plus grand diamètre et plus petite force de frottement, puisque au segment ayant le plus grand diamètre, la force de frottement agissant sur l'axe (6) est moins qu'au moment de démarrage initial tandis que elle est plus grande au segment ayant le plus petit diamètre.

2. Un moteur (1) selon la Revendication 1, **caractérisé par** un palier (4) qui comporte un pied (5) positionné à l'endroit où les segments ayant le plus petit diamètre et le plus grand diamètre sont combinés.

3. Un moteur (1) selon la Revendication 1, **caractérisé par** un palier (4) qui comporte deux pieds (5) combinant les deux bords adjacents des deux segments.

4. Un moteur (1) selon l'une quelconque des revendications précédentes, **caractérisé par** un palier (4) qui comporte un pied (5) s'étendant sur toute la surface dans le sens axial.

5. Un moteur (1) selon l'une quelconque des revendications de 1 à 3, **caractérisé par** un palier (4) qui comporte un pied (5) s'étendant seulement le long d'une partie de celui-ci dans le sens axial.
